# EUROPEAN PATENT SPECIFICATION

(11) **EP 1 389 049 B1**
(45) Date of publication and mention of the grant of the patent: **16.01.2008**
(21) Application number: 02771627.3
(22) Date of filing: 22.05.2002
(51) Int. Cl.: A23G 9/04, A23G 9/24

(54) **APPARATUS AND METHOD FOR FILLING OF ICE CREAM TO A CARRIER ELEMENT**
VORRICHTUNG UND VERFAHREN ZUM FÜLLEN EINES TRÄGERELEMENTS MIT SPEISEEIS
APPAREIL ET PROCEDE DE REMPLISSAGE DE CREME GLACEE DANS UN ELEMENT SUPPORT

(30) Priority: 23.05.2001 DK 200100836
(43) Date of publication of application: 18.02.2004
(73) Proprietor: Tetra Laval Holdings & Finance SA, 1009 Pully (CH)
(72) Inventor: WALDSTRöM, Ejvind, DK-8240 Risskov (DK)
(74) Representative: Schmidt, Jens Joergen
(86) International application number: PCT/DK2002/000343
(87) International publication number: WO 2002/094036

(56) References cited:
- US-A- 4 413 461
- US-A- 5 212 960

## Description

The present invention relates to an apparatus and a method of forming and filling of a predetermined amount of ice cream with high viscosity to a carrier element for the ice cream.

There are significant advantages related to forming and filling of a cold, stiff ice cream into a container. This allows for the possibility of reducing or even entirely eliminating a subsequent cooling before the product is transferred to a cold storage.

From US-A-4,413,461 an apparatus for forming frozen ice products is known. In this apparatus, a deformable ice portion, which is frozen around a stick, is placed in a forming tool with two forming half parts. These are closed around the ice portion, which thereby is formed in its frozen state. The ice portion may be moulded around the stick or extruded, so that a moulding tool for preliminary shaping may be eliminated. This apparatus is only usable for the production of ice-lollies, since the ice portion must be handled during the forming process. On the other hand, this method is particularly suitable for ice-lollies with special shapes.

Techniques are also known, where an ice cream bar flows out of a tube whereafter this bar is cut with a knife in portions with suitable length and volume, which subsequently are transferred to packaging. This technique may also be used for the production of ice waffles, ice cups and the like.

The disadvantages with these known techniques are that the cut off portion must be guided and thereby touched by equipment on the way to the packaging or transferred in free fall from the knife and down in the packaging. From US-A-5,212,960 a system for the production of extruded edible ice products is known, where an extruded bar of ice cream is provided with breakage lines. The bar is broken into portions along these breakage lines and transported further on a conveyor to forming and packaging and/or other process treatment. Hereby it becomes necessary to have an extensive handling of the portions of ice cream after the cutting in order to fill the portion of ice cream into a carrier element with a specific shape.

The cut-away portion has the same cross-section along its entire length whilst the packaging often has a conical shape, which is advantageous due to the stackability. This results in that the ice cream portion does not entirely fill the packaging and that it is necessary in order to achieve this must apply a pressure on the portion from the opening of the carrier element and thereby touch the ice cream. Under such a pressure, the packaging is provided with a similar action, which may deform or destroy the packaging, which often consists of or includes crispy parts, e.g. a waffle.

By this known technique there is furthermore a substantial handling and thereby the touching of the ice cream, which can damage the product and thereby influence the quality of the product in a negative manner. Moreover, complex production equipment and many process steps are needed for filling the packaging for the production of ice products.

On this background, it is the object of the invention to provide an apparatus and a method for filling a predetermined amount of ice cream in a carrier element, where the risk of damaging the products is reduced and the process run is simplified, so that a better product quality and a more profitable ice production may be achieved.

The invention consists of a method of forming and filling a predetermined amount of ice cream having a high viscosity to a carrier element for the ice cream, where a bar of ice cream is extruded out of a supply tube and is formed in corresponding to the carrier element in a forming equipment by a pressing between at least two form parts and simultaneously providing a breakage point in the ice cream bar at the inlet to the forming equipment, whereafter the forming equipment is opened and the ice portion, which is formed thereby at the end of the ice cream bar is transferred directly to the carrier element, whereafter the ice cream bar is broken at the breakage point. Moreover, the invention consist of an apparatus for forming and filling of a predetermined amount of ice cream having a high viscosity to a carrier element for ice cream by performing a method according to any of the preceding claims, wherein the apparatus comprises a supply tube through which a bar of ice cream can be extruded and fed into a form equipment, which comprises at least two form parts having a collective internal cavity, which corresponds to the geometry of the carrier element, said form parts can be closed around a predetermined portion of the extruded bar of ice cream, and cutting means for complete or partial cutting of said predetermined portion of the ice cream bar.

Hereby a process is achieved for forming and filling a predetermined amount of rigid ice cream in a carrier with the possibility of reducing or even eliminating a subsequent cooling before the ice products are transported to a cool storage. By a method and an apparatus according to the invention, it is possible to fill the rigid ice cream directly into a crisp, fragile container, such as a baked waffle without the risk of damaging the container, since the predetermined amount of ice cream is shaped according to the container.

According to the invention, the free end of the ice cream bar, which flows out of the tube, is shaped according to the container by being pressed between cooled form parts after a well known principle, but in connection with or integrally formed therein knives are provided, which produces a breakage point by only partially cutting through the ice cream bar, and thai the formed ice portion after the opening of the form parts are transferred positively as a continuous part of the ice cream bar and its outlet tube directly into the container, which is filled by the portion under a minor pressure, whereafter the ice cream bar is pulled over by the breakage point, as the ice cream bar and the container are moved away or shifted relative to each other.

The carrier element can - besides normal plastic/cardboard - e.g. consists of a baked waffle with conic shape, which is suspended in a holder, potentially with a downward opening and so that the inside space of the waffle is provided with chocolate or an other material which in partially wet condition works as an adhesive which fills the gap between the waffle and the ice cream portion, whereby this portion can be retained in the waffle when the ice cream bar is broken off, since the "adhesive" after having made contact with the very cold surface of the ice cream portion will solidify rather quickly.

Moreover, the method permits that a stick is used instead of the container, said stick being pressed into the formed ice portion, while it is still partially encompassed in the form parts, whereafter these are opened and the ice portion then is fixed to the stick as a three-dimensionally formed ice-cream stick.

The surprisingly new by this method of forming and filling extra cold ice-cream together with the emptying of ice-cream, is that it provides a large flexibility with respect to packaging and shapes of the ice with the possibility for placing the ice portion on a stick, and a good hygiene and reliability may be achieved, since the ice-cream is only touched by a few chilled parts.

In the following, the invention is described in more detail with reference to the accompanying drawings:
- Figs. 1 to 5: show the steps of the method of forming and filling a predetermined amount of ice-cream into a container according to a first preferred embodiment of the invention;
- Figs. 6 to 8: show an alternative embodiment of a method according to the invention;
- Figs. 9 and 10: show details of a second embodiment of the forming equipment according to the invention;
- Figs. 11 and 12: show a variation of the first embodiment of the forming equipment according to the first embodiment of the invention; and
- Figs. 14 to 19: show successive process steps of a method according to a preferred embodiment of the invention.

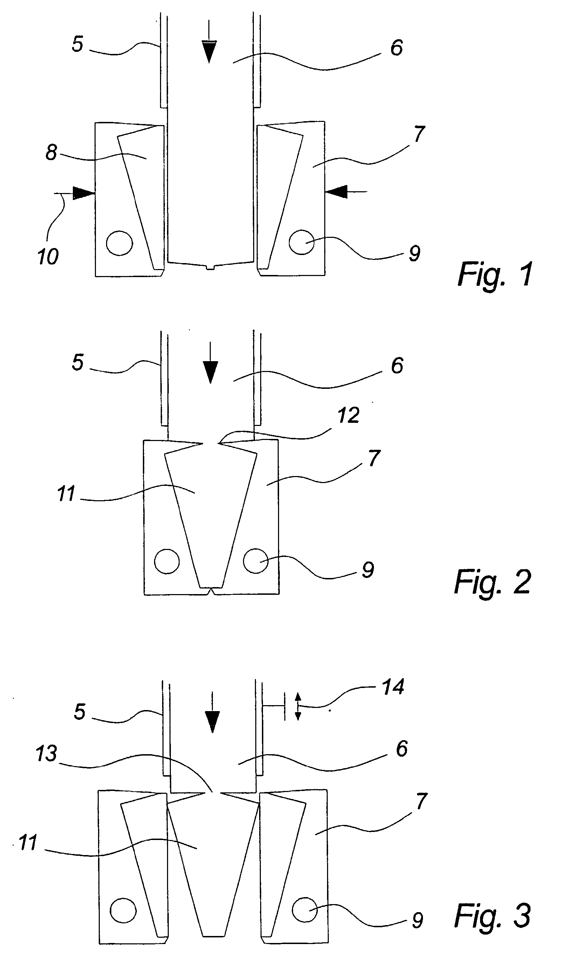

Fig. 1 shows a filling apparatus in an initial position. In the figures 1 to 5, the various process steps are shown in relation to forming and filling of a predetermined amount of ice cream 6 from a bar of ice cream into a container 15.

A continuous flow of rigid ice cream 6 passes through the outlet of a tube 5. The viscosity of the ice cream is relatively high, since the temperature normally will be in the vicinity of ÷ 15°C, where a very large amount of the water content is precipitated as ice crystals.

Two or more form parts 7 are made with cavities 8 corresponding to the desired shape of the ice cream portion. In order to achieve a good releasing effect, so that the ice cream does not stick to the form when it is opened again, the form is chilled by a cooling medium, which can be let through the form via one or more channel-drillings 9, which is a known principle. The form parts may preferably be made of aluminium or a similar material having a good heat transfer and potentially with a surface treatment with PTFE.

The two form parts 7 shown may be arranged in a guiding system (not shown) so they can be moved in a horizontal plane and with a power transmission 10, so they can be moved against each other from an open position, see fig. 1, to a closed position, see fig. 2.

Since the volume 8 of the cavities corresponds to the volume of the outgoing ice cream 6, which is to be shaped to a final product, the ice cream 6 will under the pressure influence of the form parts fill the cavities 11.

The form parts 7 may be shaped with cutting edges 12 or separate knives, which are mounted on the form parts 7. It is important that the knives 12 via a contact with the form parts 7 are chilled or provided with another cooling from the outside in order to achieve a good releasing effect with respect to the ice cream 6. In order to maintain a connection between the out-flowing ice cream 6 from the tube 5 and the formed ice portion 11, the knives 12 are shaped in such a way that they just do not contact each other in the closed position 2 of the form parts, but leave a narrowing with a breakage point 13, which may carry the ice portion when the form parts 7 are opened, as shown in fig. 3.

For the ice cream 6 to flow continuously out of the tube 5, this tube may be suspended in a device 14, which can move the tube 5 in a vertical direction, whereby the vertical movement of the ice cream portion may be terminated when the form parts 7 are being closed. Besides, the tube 5 is moved with a velocity which corresponds to the outward flow of ice cream.

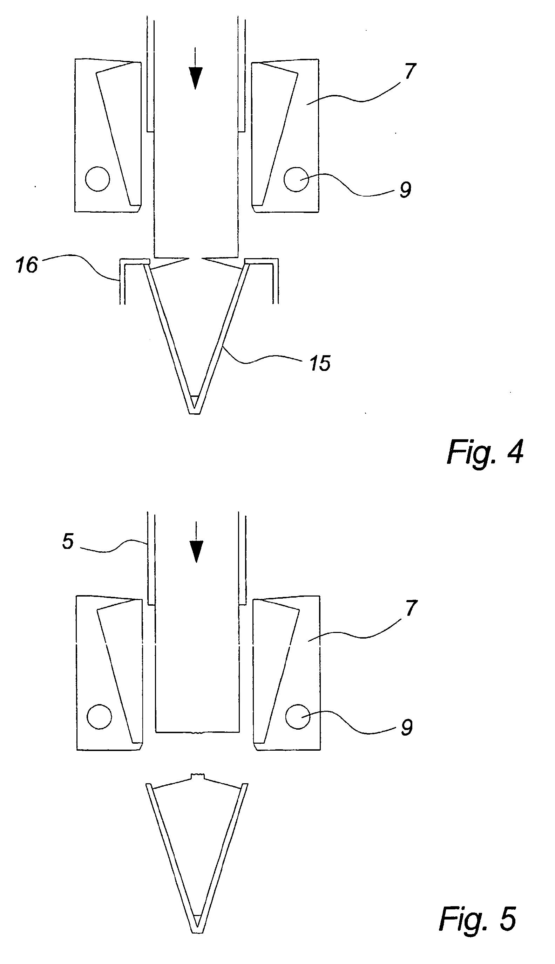

After determination of the forming (see fig. 3) the tube 5 is moved vertically downwards with the ice cream portion (see fig. 4) on an underlying container 15, so that this container is filled by the ice cream portion.

Immediately after, the tube 5 is moved upwards with the outgoing flow of ice cream (as shown in fig. 5), whereby the narrowing with the breakage point 13 is broken by pulling, as the adhesive force between the ice cream and the container 15 plus the vertical acceleration force is larger than the adhesive force in the narrowing 13. By some types of products this may be an advantage to cut the narrowing 13 by use of an extra knife or a shearing device. The container is retained with a device 16 in order to prevent it from being lifted upwards.

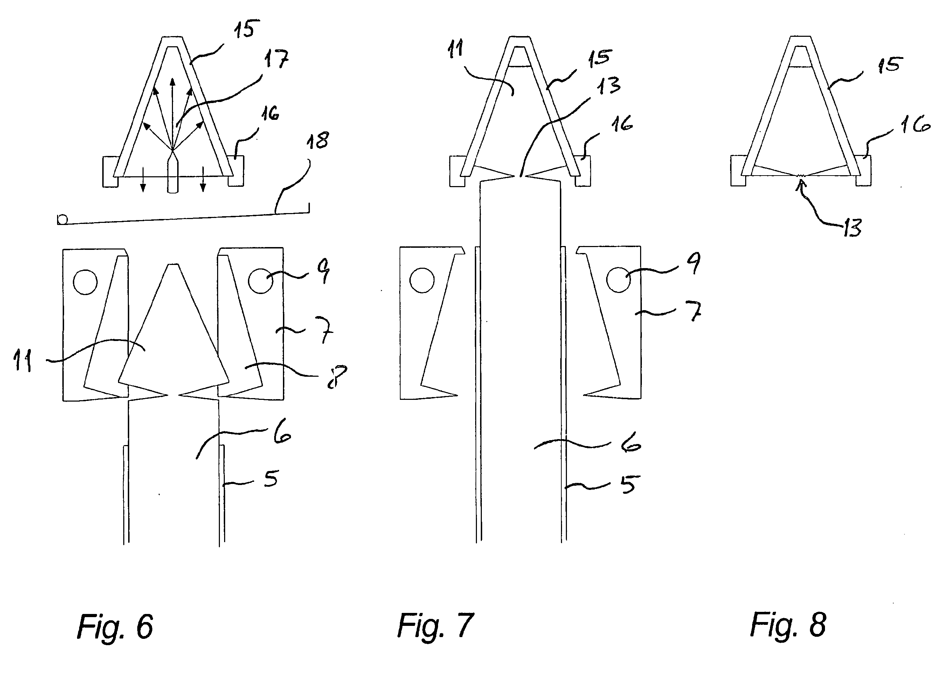

Figs. 6 to 8 show an alternative arrangement of the apparatus, as it is turned 180° so that the filling into the container now occurs vertically upwards.

This would be practical in the case where the container 15 is to be applied with a liquid medium on its internal surface, e.g. chocolate, which after the application 17 and whilst it is solidifying must run out of the container and be recovered in a tray 18 or the like, which is inserted between the container 15 and the form equipment, so the supplied surplus amount may be reused. The container 15 may in this case be a baked waffle formed like a cone or with another form, e.g. as a boat, a bend waffle with a U-shape, a so-called Taco, or any other edible material, such as dough, chocolate, marzipan or fruit. Since the ice cream portion is guided into contact with the still wet chocolate, as shown in fig. 7, it will solidify very quickly and hold the ice portion 11 to the inner surface of the container 15, whereafter the tube 5 is moved downwards, so the narrowing is pulled apart, see fig. 8.

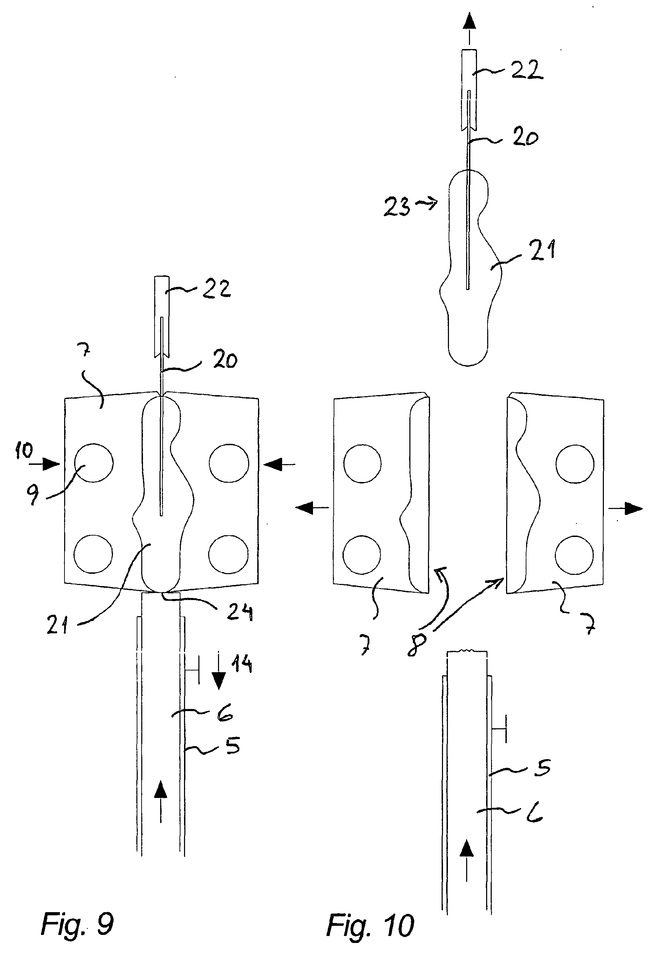

The figures 9 and 10 show an arrangement of a filling apparatus where the container is replaced by a stick 20 which is pressed into the ice cream portion 21 while the portion still is inside the form parts 7, see fig. 9. Since the stick 20 is held in a gripper 22, this will be able to carry the ice cream portion 21 after the form parts 7 are opened and pull the finished product 23 out of the form 7. According to this arrangement, the narrowing 24 is pulled apart before the form parts 7 are opened by moving the tube 5 downwards with a velocity greater than the ice cream out-going flow.

The later arrangement may also be used for forming free ice cream portions, but generally, it is the great flexibility in the principle of the invention with the simultaneous forming and partial cutting of the out-going flow of the ice cream portion. The advantage achieved is that the problematic transfer of the free ice cream portions and the positioning of these in the form are avoided.

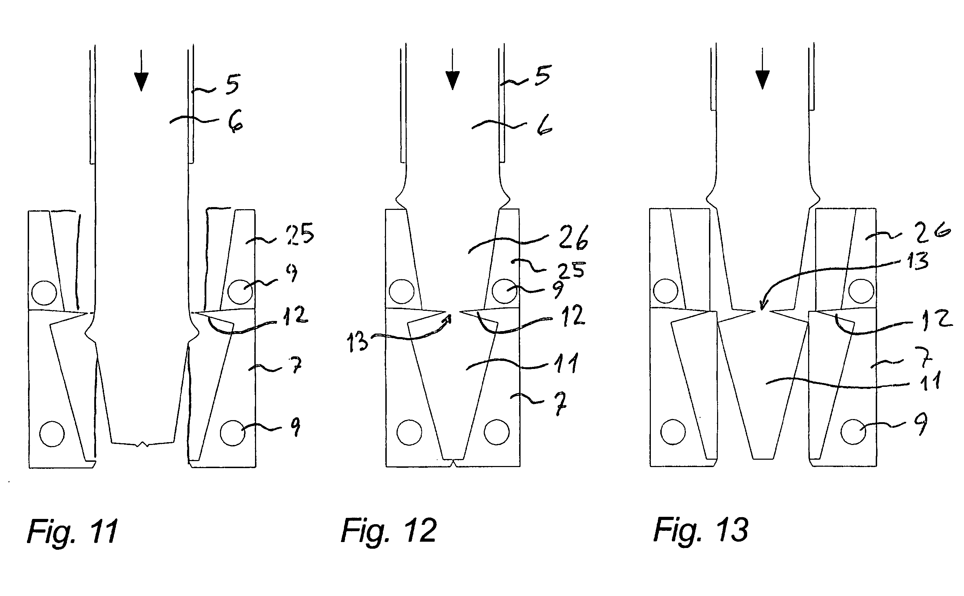

The figures 11 to 13 show an arrangement of a filling apparatus where the form parts 7 are extended above the knife 12 in the direction towards the out-going flow tube 5, such as with pre-forming parts 25. When the form parts 7 are closed, these pre-forming parts 25 have the function to provide the ice cream bar 6 above the knife 12 with a pre-pressing 26 (see fig. 12 and 13) for the purpose of reducing the total deformation of the ice cream portion 11 by the final forming in the form 7. The preform parts 25 may be provided with cooling channels 9 like the form parts 7.

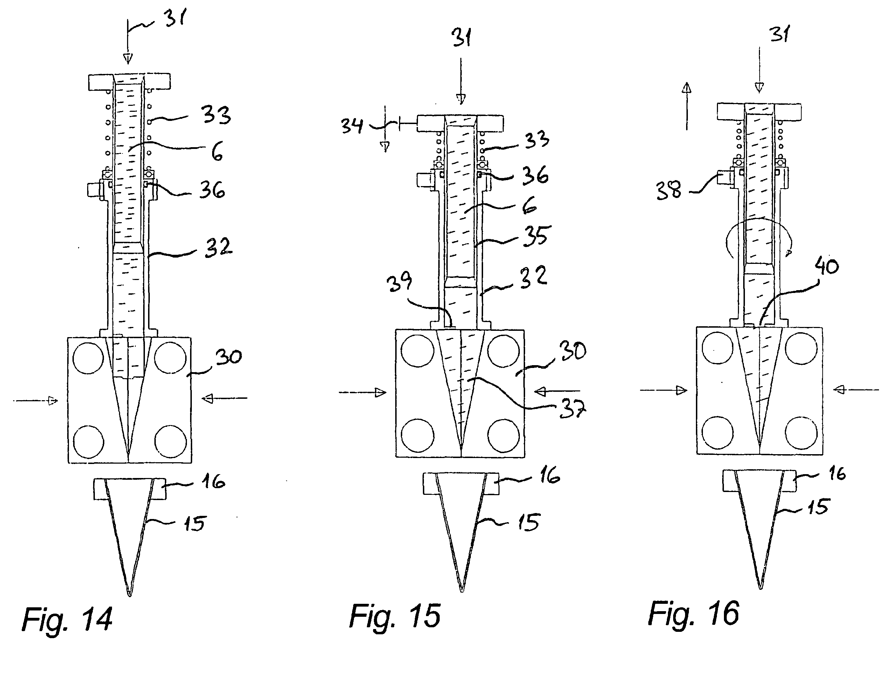

The figures 14 to 19 show an alternative embodiment of the apparatus where the form parts 30 are closed against each other while the supply of ice cream 31 takes place via an outer tube 32, which by the help of a spring 33 is pressed down against the upper surface of the form parts 30.

By means of a movement device 34, the supply tube 35 is moved downwards as it slides inside the outer tube 32 and hydraulic sealing is achieved by the sealing ring 36. Since the volume of the ice cream supply hereby is reduced, an increased pressure will be provided which aids the pressing of the ice cream out into the form cavities 37.

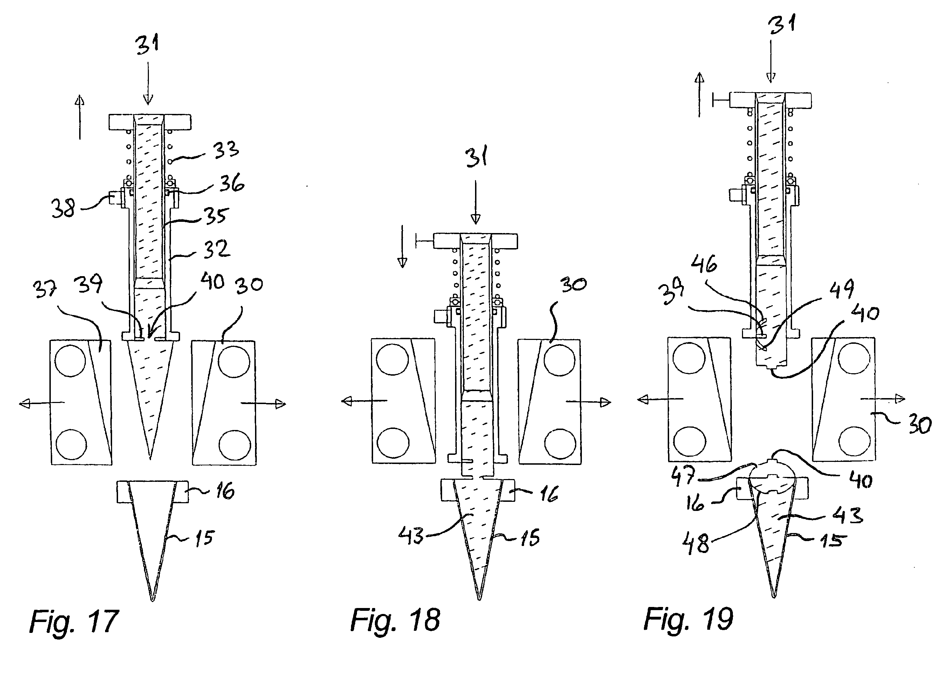

A partial screening of the ice cream 6 is achieved by providing a rotation of at least one revolution of the outer tube 32, which is provided with indentations, said rotation being achieved by a toothed rack 38 and since fixing a thin bar 39 at the bottom of the outer tube 32, the length of said thin bar being adapted so that the free end is in a certain distance from the centre, an annular groove will be created in the ice cream 6, whereby a smaller cross section is created around the centre with a breakage point 40. Immediately before this rotation starts, a movement upwards of the supply tube 35 is initiated in order to reduce the ice cream pressure, since the ice cream supply 31 continues during the entire process. The form parts 30 are opened (see fig. 17) and the supply tube 35 with the outer tube 32 is moved downwards until the ice cream portion 43 is in contact with the container 15, as shown in fig. 18.

Afterwards, the tube is moved upwards, as shown in fig. 19, since the ice cream portion 43 is pulled apart at the breakage point 40. The thin bar 39 may be made with a curved shape 46. Hereby, a curved top (a half ball) 47 is created on the ice cream as a result of the rotation if the bar 49 is curved downwards.

A possible alternative to the breakage of the breakage point 13, 24, 40 may be to arrange a container holder 16, respectively a stick gripper 22, in such a rocking or twisting manner relative to the supply tube 5 that the ice bar 6 may be broken by the breakage point.

## Claims

1. A method of forming and filling a predetermined amount of ice cream having a high viscosity to a carrier element for the ice cream, where a bar of ice cream is extruded out of a supply tube and is formed in correspondence with the carrier element in a forming equipment by a pressing between at least two form parts and simultaneously providing a breakage point in the ice cream bar at the inlet to the forming equipment, whereafter the forming equipment is opened and the ice portion, which is formed thereby at the end of the ice cream bar is transferred directly to the carrier element, whereafter the ice cream bar is broken at the breakage point.

2. A method according to claim, 1, whereby the flow direction of the ice cream bar into the forming means and onwards to the carrier element is the same, for instance vertical.

3. A method according to claim 1 or 2, where the carrier element is a wrapping container.

4. A method according to claim 3, where the carrier member is an edible container, preferably a waffle cone.

5. A method according to claim 4, whereby the inner space of the container is provided with a edible coating, such as chocolate before the ice portion is transferred to the container.

6. A method according to claim 1 to 5, whereby the ice cream bar is intermittently forwarded through the forming equipment;

7. A method according to claim 1 to 5, whereby the ice cream bar is continuously forwarded to the forming equipment, which is provided with means for pre-forming the a ice cream bar immediately before the forming equipment itself and before the means for providing a breakage point upstream the forming equipment itself.

8. A method according to claim 1 to 7, whereby the breakage is provided by a pull between the ice cream bar and the carrier element.

9. A method according to claim 1 to 7, whereby the breakage is provided by a relative rotation between the ice cream bar and the carrier element.

10. An apparatus for forming and filling of a predetermined amount of ice cream having a high viscosity to a carrier element for ice cream by performing a method according to any of the preceding claims, said apparatus comprising:
a supply tube through which a bar of ice cream can be extruded and fed into
a form equipment, which comprises
at least two form parts having a collective internal cavity, which corresponds to the geometry of the carrier element, said form parts can be closed around a predetermined portion of the extruded bar of ice cream,
**characterised in that**
cutting means are provided on the form parts at the inlet thereof, said cutting means being adapted to perform a partial cutting of said predetermined portion of the ice cream bar for providing a breakage point in the ice cream bar at the inlet to the form equipment.

11. An apparatus according to claim 10, where the cutting means are provided together with the form parts for performing a simultaneous forming of the predetermined portion and a partial cutting of said portion.

12. An apparatus according to claim 11, which further comprises means for delivery of the shaped ice portion to the carrier element.

13. An apparatus according to claim 11 or 12, where the supply tube is moveable in its axial direction for advancing the ice cream and the shaped ice portion directly into the internal cavity of the carrier element.

14. An apparatus according to claims 11 to 13, where an outer tube is concentrically arranged around the supply tube, said outer tube being shiftable i its axial direction in through the open forming equipment.

15. An apparatus according to claim 14, where the outer tube is rotatably arranged and provided with insertion means adjacent the inlet to the forming equipment, said insertion means constituting the cutting means.

16. An apparatus according to claims 11 to 15, where the delivery means comprise rotation or pulling means for the establishment of a force, which provides a breakage in the partially cutting between the shaped portion and the extruded ice cream bar.

17. An apparatus according to any of the claim 10 to 16, wherein the form parts are cooled.

18. An apparatus according to any of the claims 10 to 17, where the direction of flow of the ice cream bar is substantially vertical.

19. An apparatus according to any of the claims 10 to 18, where the carrier element is a wrapping container.

20. An apparatus according to any of the claims 10 to 18, where the carrier element is an edible container, such as a waffle cone.

21. An apparatus according to any of the claims 10 to 20, where the inner space of the container is provided with a edible coating, such as chocolate before the ice portion is transferred to the container.

22. An apparatus according to any of the claims 10 to 21, where the ice cream bar is continuously forwarded to the forming equipment, which is provided with means for pre-forming the a ice cream bar immediately before the forming equipment itself and before the means for providing a breakage point upstream the forming equipment itself.

## Patentansprüche

1. Verfahren zum Formen und Füllen einer vorgegebenen Menge von Eiscreme mit einer hohen Viskosität in ein Trägerelement für die Eiscreme, wobei eine Stange von Eiscreme aus einer Zuführungsröhre extrudiert und entsprechend dem Trägerelement in einer Formungseinrichtung geformt wird durch Pressen zwischen mindestens zwei Formteilen und gleichzeitiges Erzeugen einer Bruchstelle in der Eiscremestange am Einlass zu der Formungseinrichtung, wonach die Formungseinrichtung geöffnet wird und die Eisportion, welche dadurch am Ende der Eiscremestange geformt ist, direkt zu dem Trägerelement überführt wird, wonach die Eiscremestange an der Bruchstelle gebrochen wird.

2. Verfahren nach Anspruch 1, wobei die Fließrichtung der Eiscremestange in die Formungseinrichtung und weiter zu dem Trägerelement die gleiche ist, zum Beispiel vertikal.

3. Verfahren nach Anspruch 1 oder 2, wobei das Trägerelement ein umhüllendes Behältnis ist.

4. Verfahren nach Anspruch 3, wobei das Trägerelement ein essbares Behältnis ist, vorzugsweise ein Waffelkonus.

5. Verfahren nach Anspruch 4, wobei der Innenraum des Behältnisses mit einer essbaren Beschichtung, so wie Schokolade versehen wird, bevor die Eisportion zu dem Behältnis überführt wird.

6. Verfahren nach einem der Ansprüche 1 bis 5, wobei die Eiscremestange durch die Formungseinrichtung intermittierend gefördert wird.

7. Verfahren nach einem der Ansprüche 1 bis 5, wobei die Eiscremestange kontinuierlich gefördert wird zu der Formungseinrichtung, welche versehen ist mit Mitteln zur Vorformung der Eiscremestange unmittelbar vor der Formungseinrichtung selbst und vor den Mitteln zum Erzeugen einer Bruchstelle stromaufwärts der Formungseinrichtung selbst.

8. Verfahren nach einem der Ansprüche 1 bis 7, wobei der Bruch erzeugt wird durch einen Zug zwischen der Eiscremestange und dem Trägerelement.

9. Verfahren nach einem der Ansprüche 1 bis 7, wobei der Bruch erzeugt wird durch eine Relativdrehung zwischen der Eiscremestange und dem Trägerelement.

10. Vorrichtung zum Formen und Füllen einer vorgegebenen Menge von Eiscreme mit hoher Viskosität in ein Trägerelement für Eiscreme unter Durchführung eines Verfahrens gemäß einem der vorhergehenden Ansprüche,
wobei die Vorrichtung folgendes umfasst:
eine Zuführungsröhre, durch welche eine Stange von Eiscreme extrudiert und in eine Formungseinrichtung gefördert werden kann, umfassend
mindestens zwei Formteile mit einem gemeinsamen inneren Hohlraum, welcher der Geometrie des Trägerelements entspricht, wobei die Formungsteile um eine vorgegebene Portion der extrudierten Stange von Eiscreme geschlossen werden können,
**dadurch gekennzeichnet,**
**dass** an den Formteilen am Einlass derselben Abschneidemittel vorgesehen sind, wobei die Abschneidemittel geeignet sind, ein teilweises Abschneiden der vorgegebenen Portion von der Eiscremestange durchzuführen, um eine Bruchstelle in der Eiscremestange am Einlass zu der Formungseinrichtung zu erzeugen.

11. Vorrichtung nach Anspruch 10, wobei die Abschneidemittel zusammen mit den Formteilen vorgesehen sind, um ein gleichzeitiges Formen der vorgegebenen Portion und teilweises Abschneiden der Portion durchzuführen.

12. Vorrichtung nach Anspruch 11, welche weiterhin Mittel zur Abgabe der geformten Eisportion an das Trägerelement umfasst.

13. Vorrichtung nach Anspruch 11 oder 12, wobei die Zuführungsröhre in ihrer Axialrichtung beweglich ist, um die Eiscreme und die geformte Eisportion direkt in den inneren Hohlraum des Trägerelements vorzuschieben.

14. Vorrichtung nach Ansprüchen 11 bis 13, wobei eine äußere Röhre konzentrisch um die Zuführungsröhre angeordnet ist, wobei die äußere Röhre in ihrer Axialrichtung durch die offene Formungseinrichtung verschiebbar ist.

15. Vorrichtung nach Anspruch 14, wobei die äußere Röhre drehbar angeordnet ist und mit Einsatzmitteln nahe dem Einlass der Formungseinrichtung versehen ist, wobei die Einsatzmittel die Abschneidemittel bilden.

16. Vorrichtung nach Ansprüchen 11 bis 15, wobei die Abgabemittel Dreh- oder Zugmittel umfassen für die Erzeugung einer Kraft, welche für einen Bruch in der teilweisen Abschneidung zwischen der geformten Portion und der extrudierten Eiscremestange sorgt.

17. Vorrichtung nach einem der Ansprüche 10 bis 16, wobei die Formungsteile gekühlt sind.

18. Vorrichtung nach einem der Ansprüche 10 bis 17, wobei die Fließrichtung der Eiscremestange im Wesentlichen vertikal ist.

19. Vorrichtung nach einem der Ansprüche 10 bis 18, wobei das Trägerelement ein umhüllendes Behältnis ist.

20. Vorrichtung nach einem der Ansprüche 10 bis 18, wobei das Trägerelement ein essbares Behältnis ist, so wie ein Waffelkonus.

21. Vorrichtung nach einem der Ansprüche 10 bis 20, wobei der Innenraum des Behältnisses mit einer essbaren Beschichtung, so wie Schokolade versehen ist, bevor die Eisportion zu dem Behältnis überführt wird.

22. Vorrichtung nach einem der Ansprüche 10 bis 21, wobei die Eiscremestange kontinuierlich zu der Formungseinrichtung gefördert wird, welche versehen ist mit Mitteln zur Vorformung der Eiscremestange unmittelbar vor der Formungseinrichtung selbst und vor den Mitteln zum Erzeugen einer Bruchstelle stromaufwärts der Formungseinrichtung selbst.

## Revendications

1. Procédé pour former et remplir une quantité prédéterminée de crème glacée ayant une viscosité élevée sur un élément de support pour la crème glacée, dans lequel une barre de crème glacée est extrudée hors d'un tube d'alimentation et est formée par rapport à l'élément de support dans un équipement de formation par une pression entre au moins deux parties de forme et en prévoyant simultanément un point de rupture dans la barre de crème glacée à l'entrée de l'équipement de formation, après quoi l'élément de formation est ouvert et la partie de glace, qui est formée ainsi à la fin de la barre de crème glacée est transférée directement sur l'élément de support, après quoi la barre de crème glacée est rompue au niveau du point de rupture.

2. Procédé selon la revendication 1, moyennant quoi la direction d'écoulement de la barre de crème glacée dans les moyens de formation et en avant de l'élément de support est la même, par exemple verticale.

3. Procédé selon la revendication 1 ou 2, dans lequel l'élément de support est un contenant d'emballage.

4. Procédé selon la revendication 3, dans lequel l'élément de support est un contenant comestible, de préférence un cornet gaufre.

5. Procédé selon la revendication 4, moyennant quoi l'espace interne du contenant est doté d'un revêtement comestible, tel que du chocolat avant que la partie de glace ne soit transférée dans le contenant.

6. Procédé selon la revendication 1 à 5, moyennant quoi la barre de crème glacée avance de manière intermittente par le biais de l'équipement de formation.

7. Procédé selon les revendications 1 à 5, moyennant quoi la barre de crème glacée avance de manière continue vers l'équipement de formation, qui est doté de moyens pour pré-former une barre de crème glacée immédiatement avant l'équipement de formation lui-même et avant les moyens pour fournir un point de rupture en amont de l'équipement de formation lui-même.

8. Procédé selon les revendications 1 à 7, moyennant quoi la rupture est fournie par une traction entre la barre de crème glacée et l'élément de support.

9. Procédé selon les revendications 1 à 7, moyennant quoi la rupture est fournie par une rotation relative entre la barre de crème glacée et l'élément de support.

10. Appareil pour former et remplir une quantité prédéterminée de crème glacée ayant une viscosité élevée dans un élément de support pour crème glacée en réalisant un procédé selon l'une quelconque des revendications précédentes, ledit appareil comprenant :
un tube d'alimentation à travers lequel une barre de crème glacée peut être extrudée et alimentée dans un équipement de formation, qui comprend :
au moins deux parties de formation ayant une cavité interne collective, qui correspond à la géométrie de l'élément de support, lesdites parties de formation peuvent être fermées autour d'une partie prédéterminée de la barre de crème glacée extrudée,
**caractérisé en ce que**
l'on prévoit des moyens de coupe sur les parties de formation au niveau de leur entrée, lesdits moyens de coupe étant adaptés pour réaliser une coupe partielle de ladite partie prédéterminée de barre de crème glacée pour fournir un point de rupture dans la barre de crème glacée à l'entrée de l'équipement de formation.

11. Appareil selon la revendication 10, dans lequel les moyens de coupe sont tous dotés de parties de formation pour réaliser une formation simultanée de la partie prédéterminée et une coupe partielle de ladite partie.

12. Appareil selon la revendication 11, qui comprend en outre des moyens pour distribuer la partie de glace formée dans l'élément de support.

13. Appareil selon la revendication 11 ou 12, dans lequel le tube d'alimentation est mobile dans sa direction axiale pour faire avancer la crème glacée et la partie de glace formée directement dans la cavité interne de l'élément de support.

14. Appareil selon les revendications 11 à 13, dans lequel un tube externe est agencé de manière concentrique autour du tube d'alimentation, ledit tube externe pouvant être décalé dans sa direction axiale par le biais de l'équipement de formation ouvert.

15. Appareil selon la revendication 14, dans lequel le tube externe est agencé de manière rotative et doté de moyens d'insertion adjacents à l'entrée de l'équipement de formation, lesdits moyens d'insertion constituant les moyens de coupe.

16. Appareil selon les revendications 11 à 15, dans lequel les moyens de distribution comprennent des moyens de rotation ou de traction pour l'établissement d'une force, qui fournit une rupture dans la coupe partielle entre la partie formée et la barre de crème glacée extrudée.

17. Appareil selon l'une quelconque des revendications 10 à 16, dans lequel les parties de formation sont refroidies.

18. Appareil selon l'une quelconque des revendications 10 à 17, dans lequel la direction d'écoulement de la barre de crème glacée est sensiblement verticale.

19. Appareil selon l'une quelconque des revendications 10 à 18, dans lequel l'élément de support est un contenant d'emballage.

20. Appareil selon l'une quelconque des revendications 10 à 18, dans lequel l'élément de support est un contenant comestible, tel qu'un cornet gaufre.

21. Appareil selon l'une quelconque des revendications 10 à 20, dans lequel l'espace interne du contenant est doté d'un revêtement comestible, tel que du chocolat avant que la partie de glace ne soit transférée dans le contenant.

22. Appareil selon l'une quelconque des revendications 10 à 21, dans lequel la barre de crème glacée est avancée de manière continue vers l'appareil de formation, qui est doté de moyens pour préformer la barre de crème glacée immédiatement avant l'équipement de formation lui-même et avant les moyens pour fournir un point de rupture en amont de l'équipement de formation lui-même.
